# EUROPEAN PATENT SPECIFICATION

(11) **EP 2 486 738 B1**
(45) Date of publication and mention of the grant of the patent: **22.01.2014**
(21) Application number: 10774308.0
(22) Date of filing: 15.09.2010
(51) Int. Cl.: H04W 72/00, H04W 72/04, H04W 52/02

(54) **METHODS AND ARRANGEMENTS FOR IMPROVING MBMS IN A MOBILE COMMUNICATION SYSTEM**
VERFAHREN UND ANORDNUNGEN ZUR VERBESSERUNG VON MBMS IN EINEM MOBILEN KOMMUNIKATIONSSYSTEM
PROCÉDÉS ET AGENCEMENTS POUR AMÉLIORER UN SERVICE MBMS DANS UN SYSTÈME DE COMMUNICATION MOBILE

(30) Priority: 05.10.2009 US 248633 P
(43) Date of publication of application: 15.08.2012
(73) Proprietor: Telefonaktiebolaget L M Ericsson (publ), 164 83 Stockholm (SE)
(72) Inventor: PHAN, Mai-Anh, 52134 Herzogenrath (DE); PELLETIER, Ghyslain, S-961 39 Boden (SE); VAN DER ZEE, Martin, SE-214 41 Malmö (SE); HUSCHKE, Jörg, 52074 Aachen (DE)
(74) Representative: HOFFMANN EITLE
(86) International application number: PCT/SE2010/050993
(87) International publication number: WO 2011/043713

(56) References cited:
- US-A1- 2006 258 410
- US-A1- 2007 198 468

## Description

### TECHNICAL FIELD

The present disclosure relates to a method and arrangement in a mobile communication system, in particular to methods and arrangements for providing improved signaling information when applying Multimedia Broadcast/Multicast Services (MBMS).

### BACKGROUND

US-A1-2006/0258410 discloses a method and system for determining sleep periods within a communications device configured to communicate via a network The method includes analyzing at least one of two or more data fields related to a data unit and determining device sleep periods based upon the analysis. The analysis includes determining whether or not particular MediaFLO Logical Channel data (MLC) is present within an overhead information symbols channel. If MLC data is not present, the device sleeps for a predetermined amount of time.

Multimedia Broadcast/Multicast Service (MBMS) technology was first introduced for UMTS Wideband Code Division Multiple Access (WCDMA) in Rel-6 of the 3GPP specifications in order to enhance the delivery of identical multimedia contents from one source to multiple receivers in terms of transmission resources. Meanwhile, MBMS has also been standardized for the next release, Rel-9, of the enhanced UMTS Terrestrial Radio Access Network (E-UTRAN), and is therefore also known as enhanced MBMS (eMBMS). During the standardization process of MBMS, several new logical channels were introduced. In the following description the MBMS concept will be explained by means of examples for E-UTRAN Rel-9. However, the description is also applicable for the MBMS concept as used in WCDMA according to Rel-6 of the 3GPP specifications with system specific differences using e.g. other logical, transport and physical channels.

The MBMS Control Channel (MCCH) is needed for the User Equipment (UE) to obtain service specific information necessary for MBMS service reception, e.g. physical multicast channel (PMCH) configuration such as modulation and coding scheme, MBMS subframe allocation etc. Furthermore, the MCCH also announces session starts and session ends of services. Changes on MCCH may only be conducted at the next modification period. Thus, an MBMS User Equipment (UE) only has to wake up once within a modification period to check if there have been any changes.

Each MBMS service session is mapped to an MBMS Traffic Channel (MTCH). The Multicast Channel (MCH) is used as transport channel to carry the MBMS service data or the corresponding MTCH, respectively. Several MTCHs can be bundled and multiplexed on the same MCH if they have the same quality of service (QoS) requirements. As an MBMS UE is often only interested in a subset of the services carried on the same MCH, it is also desirable that each MCH carries scheduling information for the services mapped to that MCH. Previously, such scheduling information was denoted dynamic scheduling information (DSI) but in current development of MBMS, the scheduling information is denoted MCH Scheduling Information (MSI) and as such provides the information that it is specific for each MCH.

After reading the MSI, the UE knows when it has to wake up to receive the service(s) of its interest, while it can sleep during the transmission of other services. The MSI information is valid for one scheduling period, or more specifically the MCH scheduling period, MSP, which has a duration of typically 32 radio frames corresponding to 320 ms, but it may also be shorter or longer (up to a few seconds) in duration depending on the services' burstiness and on the limit of the delay that is introduced by the scheduling.

The MSI may be transmitted in the MAC Control Element (MAC CE) of the first transport block (TB) of a scheduling period. The radio resource, e.g. a subframe in the context of E-UTRAN in which the MSI is transmitted, is therefore known implicitly from the start of the scheduling period.

The MSI may distinguish between unscheduled and scheduled services. For instance, a bitmap may be used to distinguish between the services, where each bit of the bitmap may correspond to one service according to a defined mapping. Moreover, the MSI may have a data field having a defined value range for each scheduled service. For scheduled services, the data field may comprise information about the service's transmit time, which may e.g. be indicated by a start, end or length. A data field may also exist in the MSI for each unscheduled service, e.g. containing a special value called codepoint, which is defined to indicate that the service is not scheduled. Alternatively, unscheduled services may be indicated by using a bitmap.

### SUMMARY

Session ends may only be announced at the next MCCH modification period boundary. It has been observed to be a problem that even if the service is not scheduled, the UE has to wake up to read MSI at every scheduling period until the session end is announced on MCCH. Since the modification period is in general significantly larger than the scheduling period, the UE has thus to wake up at each scheduling period and consumes more battery power than necessary. If the network knows in advance that a specific service is not scheduled for more than the current scheduling period, there is no possibility to inform the UE to sleep for a longer period. Similar as in the case before, there is less potential to save UE battery.

It is therefore an object of embodiments herein to provide a mechanism that obviates at least some of these drawbacks and decreases battery power consumption in a network node.

The present invention provides a method in a network node according to Claim 1.

Furthermore, the present invention provides a method in a user equipment according to Claim 13.

Moreover, the present invention provides a network node according to Claim 14.

In addition, the present invention provides a user equipment according to Claim 15.

### BRIEF DESCRIPTION OF THE DRAWINGS

Fig.1 illustrates schematically a mobile communication system.
Fig. 2 illustrates schematically a network node.
Fig. 3 illustrates schematically a user equipment.
Fig. 4a is a flow chart of a method in a network node.
Fig. 4b is a flow chart of a method in a user equipment.
Fig. 5 illustrates content and timing in logical channels and traffic channels.
Fig. 6a illustrates MCH scheduling information according to prior art.
Fig. 6b illustrates the general structure of MSI MAC CE.
Fig. 7 illustrates MCH scheduling information using bitmap representation.
Fig. 8 illustrates MCH scheduling information using codepoint representation.
Fig. 9a illustrates determination of scheduling information using bitmap representation.
Fig. 9b is a flow chart of determination of scheduling information using bitmap representation.
Fig. 10a illustrates determination of scheduling information using codepoint representation.
Fig. 10b is a flow chart of determination of scheduling information using codepoint representation.

### DETAILED DESCRIPTION OF EMBODIMENTS

The following describes a method for providing Multimedia Broadcast/Multicast Service (MBMS) in a mobile communication network including data transmission of such a service from a network node to a user equipment, in which the MCH scheduling information (MSI) for one or more services mapped on the same transport channel is transmitted in each scheduling period, wherein:
- the MSI provides information about the data transmission of the service beyond the current scheduling period;
- the MSI also indicates the session end such that the UE does not have to monitor the MSI anymore;
- the MSI provides information about the (minimum) number of future scheduling periods in which a specific service will not be scheduled;
- the MSI provides information about the scheduling period at which the UE shall wake up for the next time to receive scheduling information about the service of its interest.

In other words, it is thus an idea that MCH Scheduling Information (MSI) is extended to contain further information about unscheduled services to provide information beyond the current scheduling period. This implies that the session end is also indicated in the MSI in addition to the MCCH. Furthermore, the MSI shall not only be restricted to one scheduling period. This is not only applicable to eMBMS but may also be applied on the MBMS scheduling channel (MSCH) used in WCDMA.

Furthermore, the MSI may use, based on the service list provided on the MCCH, a bitmap for providing service information. Said information may indicate, e.g., whether an unscheduled service has already ended or whether a service will not be scheduled at least for the current and/or at least next scheduling period, which also may be referred to as a silent period. In this case, the MSI field for the service may indicate the sleep duration or the next wake-up occasion to the UE. This information may use less bits than used for the transmit time information for scheduled services.

Moreover, the MSI may use a special codepoint, e.g., in order to indicate whether an unscheduled service has already ended or whether the service will not be scheduled at least for the current and/or at least next scheduling period. The codepoint must be different from the values used for the transmit time information. The MSI may contain sleep duration, or the next wake-up occasion for the service. The sleep duration may be obtained from a defined mapping of codepoints to sleep durations, e.g. by:
- subtracting the codepoint that may be expressed with the given number of bits with the maximum number that is within the transmit time information range; or
- by subtracting the maximum value with the given codepoint.

When applying a special codepoint as described above, the value range that is reserved or valid to indicate the transmit time of scheduled services or the allowed value range to indicate the sleep duration of unscheduled services, may be indicated explicitly on the MCCH or, alternatively, the UE obtains sufficient information to calculate the used value range.

To summarize effects and advantages of the different aspects and embodiments, a UE is allowed to remain for a longer time in a sleep mode as it may ignore scheduling information it does not need to read. Thus, the UE may maximize its sleep time and reduce battery consumption. This is especially useful for very short service sessions required for small file downloads, but also for long intermittent services with low traffic volume.

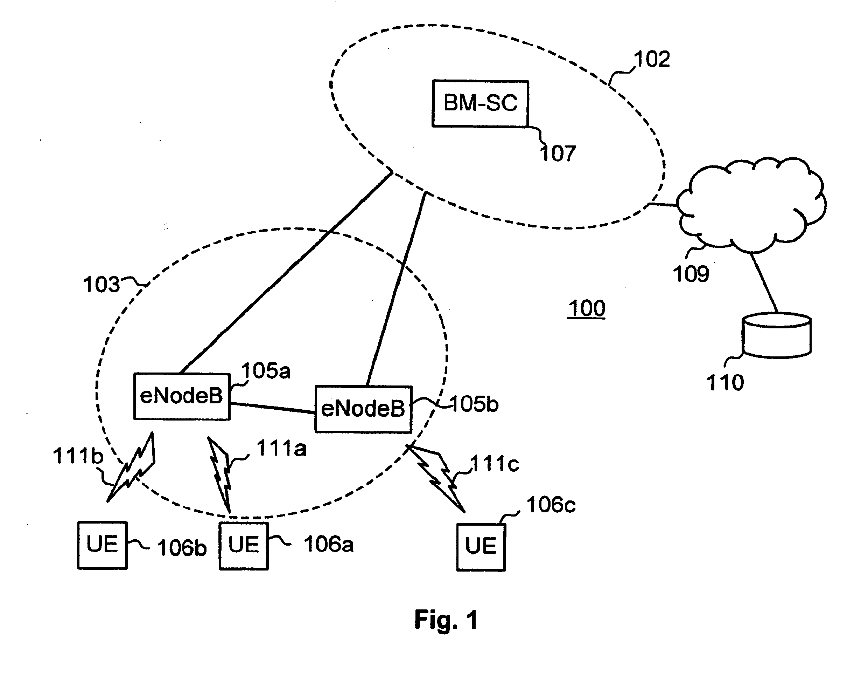

Figure 1 illustrates schematically a network 100, i.e. an universal mobile telecommunications system (UMTS) network, in which the above summarized methods and apparatuses may be implemented. It should be noted, however, that the skilled person will readily be able to perform implementations in other similar wireless communication networks involving transmission of coded data between nodes.

In figure 1 the network 100, i.e. UMTS network, comprises a core network 102, for example a System Architecture Evolution (SAE) network, and a LTE terrestrial radio access network (E-UTRAN) 103. The E-UTRAN 103 comprises a number of nodes in the form of enhanced Node B's, or eNode B's. Each eNode B 105 is responsible for one or more geographical cells and signaling between the eNode B's 105 and the core network 102, as well as signaling between the eNode B's 105, takes place according to protocols known to the person skilled in the art. Figure 1 also illustrates nodes in the form of mobile devices or user equipment (UE) 106a-c connected to a respective Node B 105a-b in the E-UTRAN 103 via a respective air interface 111a-c. Mobile devices served by one eNode B, such as devices 106a and 106b served by eNode B 105a, are located in a so-called radio cell.

A Broadcast/Multicast Service Center (BM-SC) 107 in the core network 102 enables the network 100 to provide Multimedia Broadcast/Multicast Service, MBMS, in that it controls, i.a., the data flow of the MBMS in the core network 102. The BM-SC is coupled via the Internet 109 to a server 110 that illustrates an entity from which the mobile devices 106 may receive the MBMS discussed herein. As the skilled person realizes, the network 100 in figure 1 may comprise a large number of similar functional units in the core network 102 and the E-UTRAN 103, and in typical realizations of networks, the number of mobile devices may be very large.

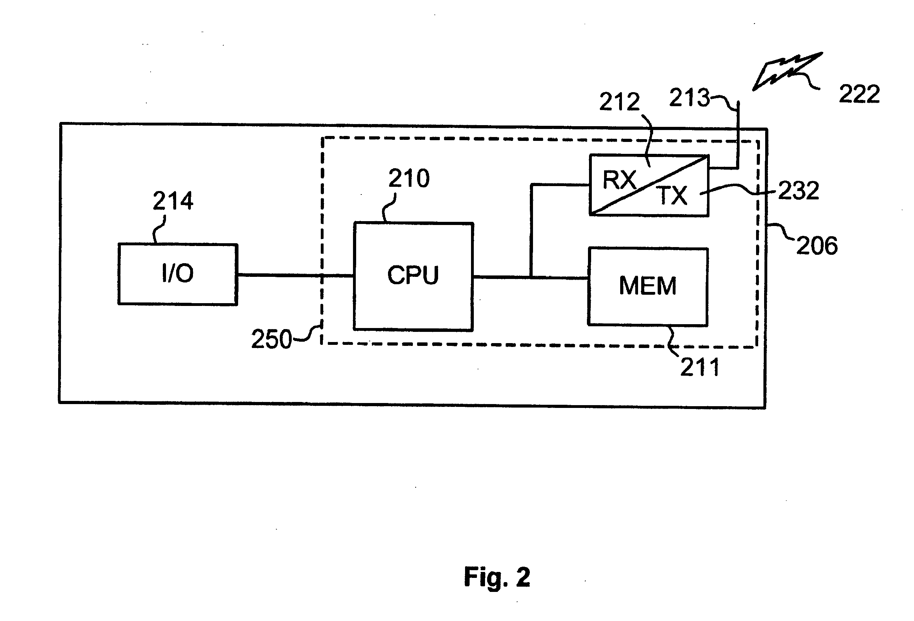

Figure 2 illustrates schematically a network node 206, corresponding to any of the nodes 105 in figure 1. The network node 206 comprises a processor 210 (CPU), a memory 211 (MEM), radio receiving circuitry 212 (Rx), radio sending circuitry 232 (Tx) and an antenna 213. Radio communication via a radio interface 222 is realized by the radio receiving/transmitting circuitry (212, 232) controlled by the processor 210. An input/output interface unit 214 (I/O) connects the network node 206 with other nodes in a core network, such as the core network 102 in the network 100 in figure 1. The processor 210 makes use of software instructions stored in the memory 211 in order to control all functions of the network node 206, including the functions to be described in detail below with regard to provision of MBMS. In other words, at least the radio receiving/transmitting circuitry (212, 232) the processor 210 and the memory 211 form parts of control and communication circuitry 250 that is configured to control transmission of data as summarized above and described in detail below. Further details regarding how these units operate in order to perform normal functions within a UMTS/LTE network, such as the network 100 of figure 1, are known to the skilled person and are therefore not discussed further.

In some more detail, the network node 206 is configured for providing Multimedia Broadcast/Multicast Service, MBMS, from the network node 206 to a user equipment, UE, in a mobile communication system such as the UE 106 in the network 100 in figure 1. The control and communication circuitry 250 comprises transmission circuitry 232 configured to transmit data of at least one MBMS service and scheduling information for said MBMS service(s), the transmission taking place in a current scheduling period and in a plurality of consecutive scheduling periods following the current scheduling period. Determination circuitry, (210, 211) (i.e. CPU and MEM) forming part of the control and communication circuitry 250, is configured to determine the scheduling information such that the scheduling information comprises information about transmission of data of the at least one MBMS service for a scheduling period that is later than the current scheduling period.

The determination circuitry (210, 211) i.e. CPU and MEM, may be configured to determine the scheduling information such that the information comprises information that indicates an end of session for the MBMS service as well as information that indicates a number of scheduling periods in which the MBMS service will not be scheduled, for example a minimum number of scheduling periods, in which the UE e.g. shall sleep without receiving any further scheduling information.

Moreover, the determination circuitry (210, 211) may be configured to determine the scheduling information such that the information comprises information about the next scheduling period in which the UE shall receive scheduling information about the sleep duration or the MBMS service. The determination circuitry (210, 211) may be configured such that it determines the scheduling information in a bitmap form, which indicates whether or not the MBMS service has ended and/or indicates whether or not the MBMS service will not be scheduled at least for the current scheduling period.

Alternatively, the determination circuitry (210, 211) may be configured such that it determines the scheduling information in a codepoint form, which indicates whether or not the MBMS service has ended and/or indicates whether or not the MBMS service will not be scheduled at least for the next scheduling period. Furthermore, the determination circuitry (210, 211) may be configured such that it determines the scheduling information in a codepoint form, which represents any of sleep duration and wake-up time point for the UE.

The network node 206 may also be configured such that the transmission circuitry is capable of transmitting of information that indicates a valid value range for the codepoint, which may indicate the sleep duration and/or the transmit time.

Figure 2 may also be described as illustrating an arrangement 250, ie. the control and communication circuitry, in a network unit 206 comprising a processing circuit 210 configured to adapt the MCH scheduling information (MSI) for one or more services mapped on the same transport channel to be transmitted in each scheduling period. The MSI may thus provide in various embodiments information about the data transmission of the service beyond the current scheduling period, an indication for a session end such that a UE does not have to monitor the MSI anymore, information about the (minimum) number of future scheduling periods in which the UE shall sleep because a specific service will not be scheduled, or information about the scheduling period at which the UE shall wake up for the next time to receive scheduling information about the service of its interest. The processing circuit is configured to provide such information, e.g., in form of a bitmap for example together with a data field for further information, or by using a special codepoint.

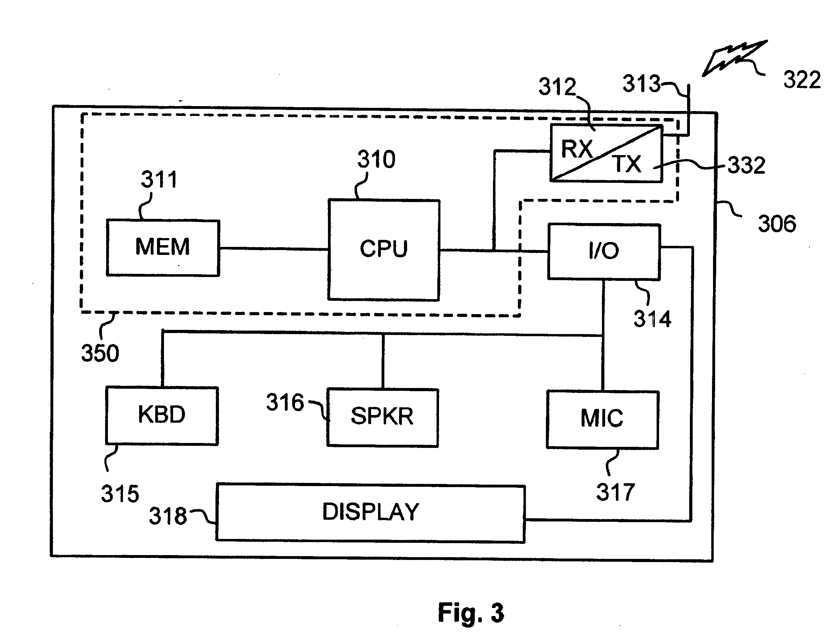

Figure 3 illustrates schematically a user equipment (UE) 306. The UE 306 is a mobile communication device, corresponding to any of the communication devices 106 in figure 1. The UE 306, which is shown in some more detail as compared to the description of the device 106 in figure 1, comprises a processor 310 (CPU) and a memory 311 (MEM). Input/output units in the form of a microphone 317 (MIC), a speaker 316 (SPKR), a display 318 and a keypad 315 (KBD) are connected to the processor 310 and memory 311 via an input/output interface unit 314 (I/O). Radio communication via a radio interface 322 is realized by radio receiving circuitry 312 (Rx), radio sending circuitry 332 (Tx) and an antenna 313. The processor 310 makes use of software instructions stored in the memory 311 in order to control all functions of the UE 306, including the functions to be described in detail below with regard to MBMS. In other words, at least the radio receiving/sending circuitry (312, 332), the processor 310 and the memory 311 form parts of control and communication circuitry 350 that is configured to control transmission of data as summarized above and described in detail below. Further details regarding how these units operate in order to perform normal functions within a UMTS/LTE network, such as the network 100 of figure 1, are known to the skilled person and are therefore not discussed further.

In some more detail, the UE 306 is configured for receiving Multimedia Broadcast/Multicast Service, MBMS, from a network node in a mobile communication system such as the node 206 (figure 2) in a system such as the network 100 in figure 1. The reception circuitry 312 is configured to receive data of at least one MBMS service and scheduling information for said MBMS service(s), the reception taking place in a current scheduling period. Determination circuitry 310, 311, forming part of the control and communication circuitry 350, is configured to determine that the received scheduling information comprises information about the reception of data of the at least one MBMS service for a scheduling period that is later than the current scheduling period. Interpretation and control circuitry310, 311, also forming part of the control and communication circuitry 350, is configured to interpret the received scheduling information and, as a consequence of the interpretation, control the UE to enter a sleep mode for a duration of at least one scheduling period.

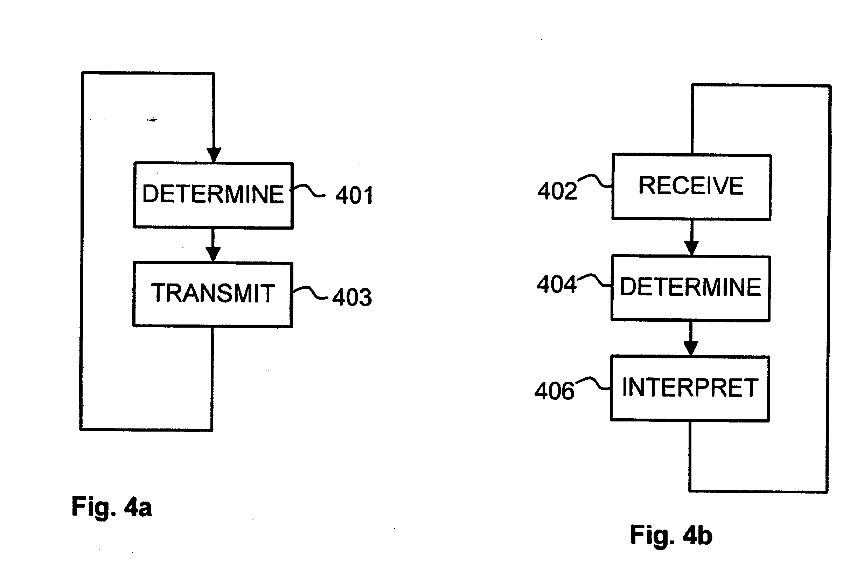

Figures 4a and 4b are flow charts that illustrate interaction between a network node and a UE, for example any of the network nodes and UE's described above in connection with figures 1 to 3.

Figure 4a illustrates a method in a network node in a mobile communication system for providing Multimedia Broadcast/Multicast Service, MBMS, from the network node to a user equipment, UE. The method comprises, in a transmission step 403, transmitting data of at least one MBMS service and scheduling information for said MBMS service(s). The transmission takes place in a current scheduling period and in a plurality of consecutive scheduling periods following the current scheduling period. The scheduling information is determined, in a determination step 401, such that the scheduling information comprises information about transmission of data of the at least one MBMS service for a scheduling period that is later than the current scheduling period.

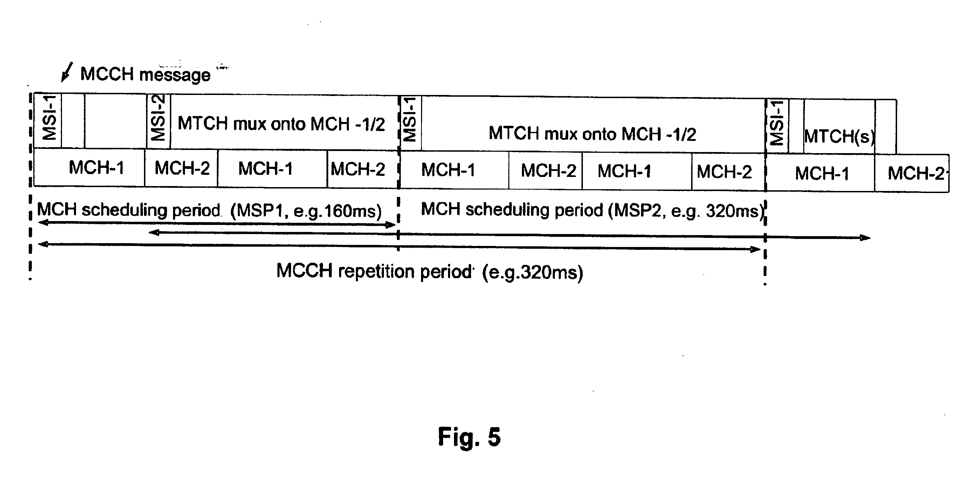

Figure 5 illustrates content and timing in logical channels and traffic channels in a system such as the network 100 described above in connection with figures 1 to 4. MCH scheduling information, MSI, is transmitted for each configured MCH. The MCH scheduling period, MSP, is configurable per MCH. In the example in figure 5, the MSP for MCH-1 is 160 ms, while the MSP for MCH-2 is 320 ms. The MCCH repetition period in this example is 320 ms, and the transmission of the MCCH message occasionally overlaps with the MSI of MCH-1.

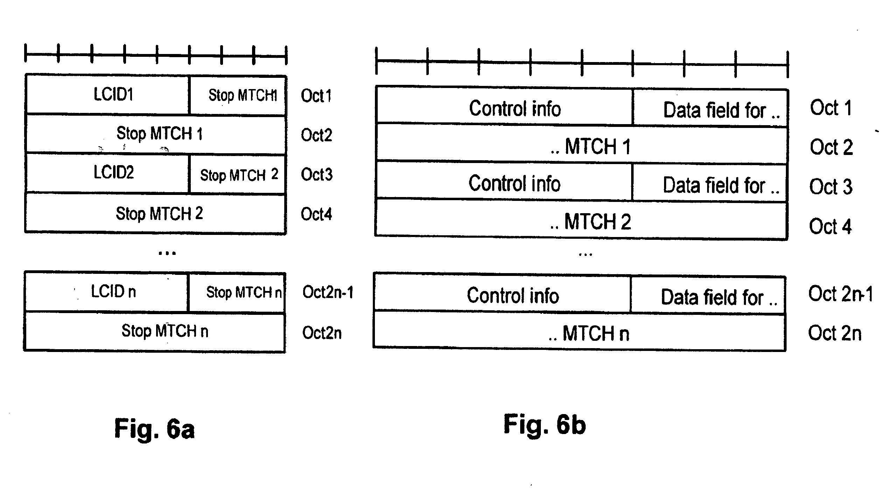

Figure 6a illustrates MCH Scheduling Information MAC CE, 2 bytes per service, according to prior art. Figure 6b illustrates the general structure of MSI MAC CE, using 2 bytes per service.

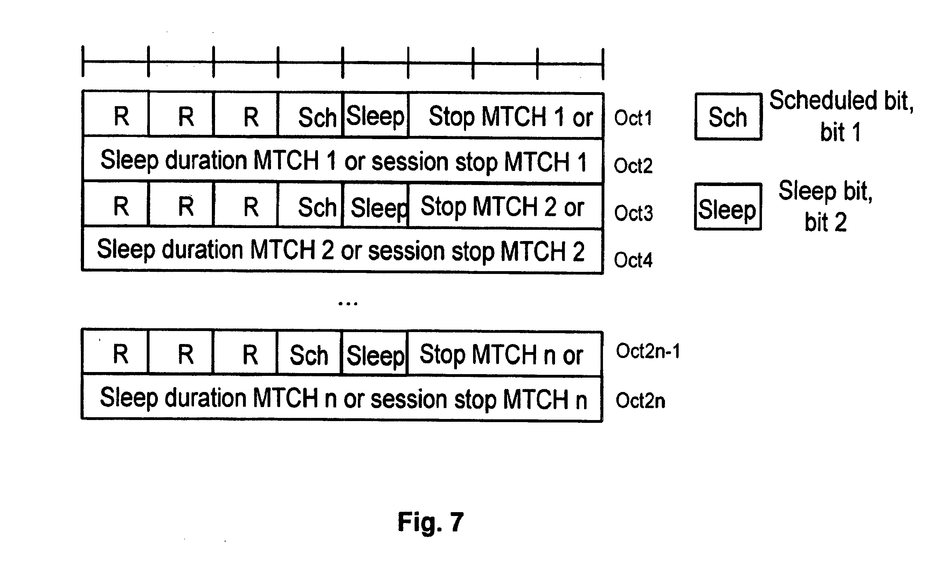

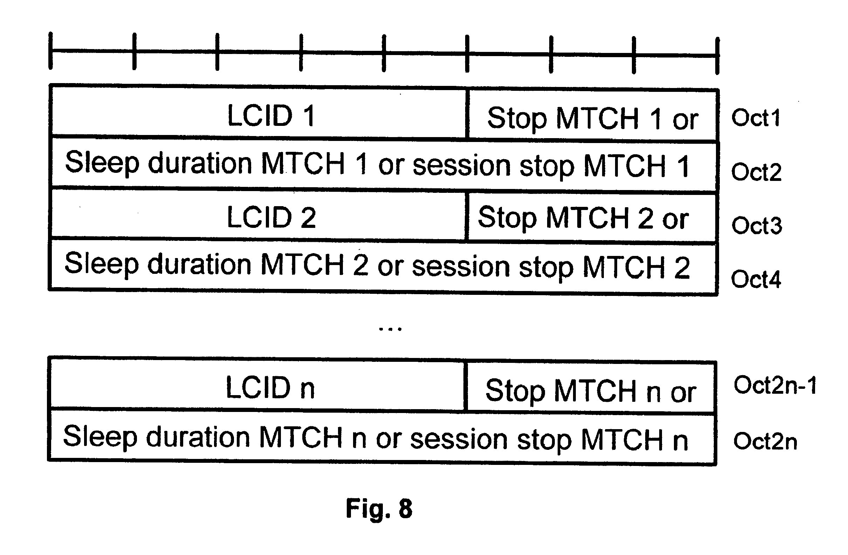

Figure 7 illustrates MCH scheduling information using bitmap representation. No LCID is used, but the order relies on information given on MCCH. Figure 8 illustrates MCH scheduling information using codepoint representation with 2 bytes per service.

The value range for "Stop MTCH" is 0 - 2042, there are four reserved values ranging from 2043 - 2046, and the value for not scheduled is 2047.

In principle, larger savings may be achieved for lower MSPs. With shorter MSPs, not all values for the "Stop MTCH" will be used. If the MSP is rather large, e.g. 2.56 s corresponding to 2560 subframes, at most 1536 values would be needed, 1536 = 2560*0.6 since there are at most 6 MBSFN subframes in a radio frame, so that only values between 0 - 1535 would be used. The remaining values from 1536 to 2042 are categorized "invalid". So alternatively is reserved values, which only contain four values and would not provide fine granularity and a sufficiently large value range at the same time, invalid values may be used to indicate for how many scheduling periods the UE may sleep or when it shall wake up, respectively.

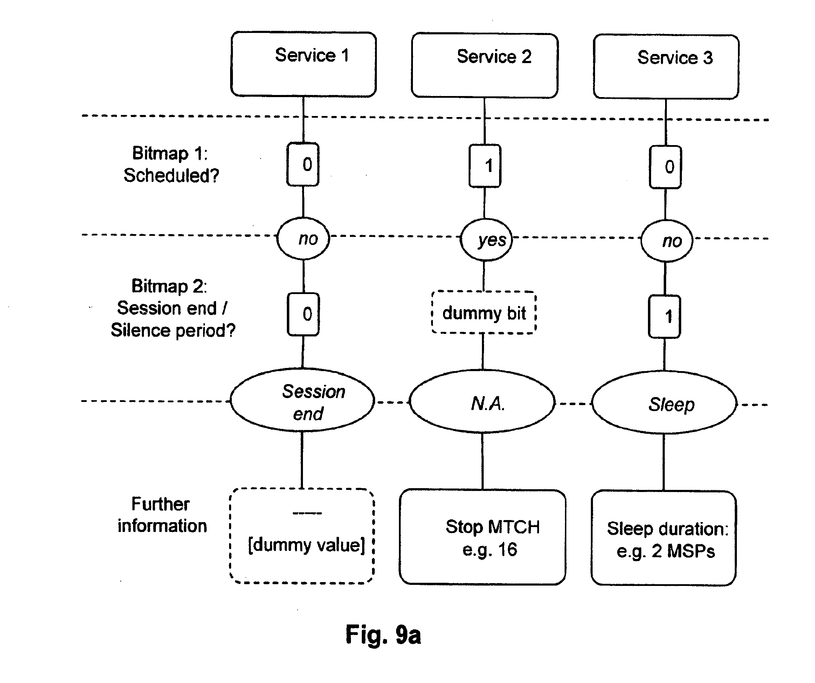

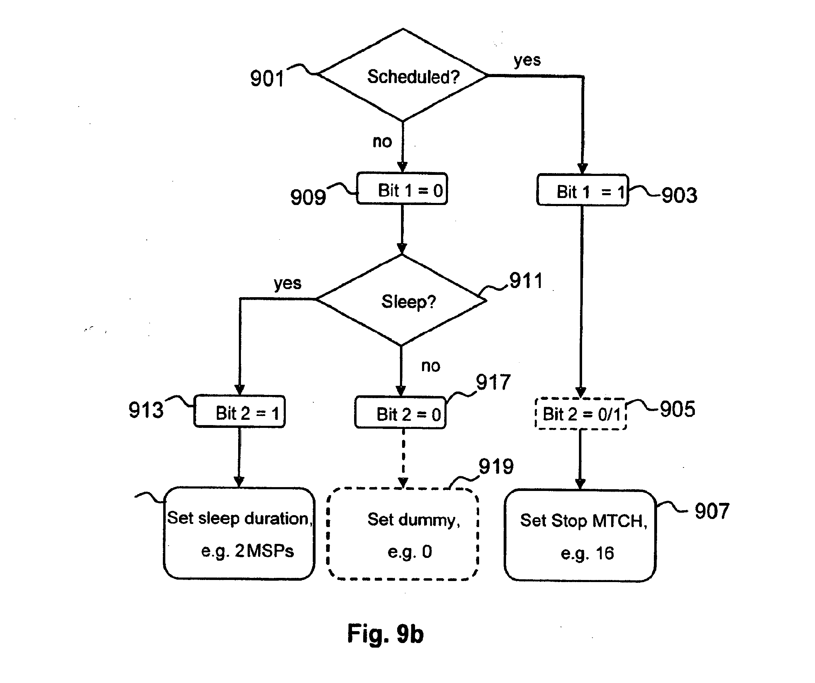

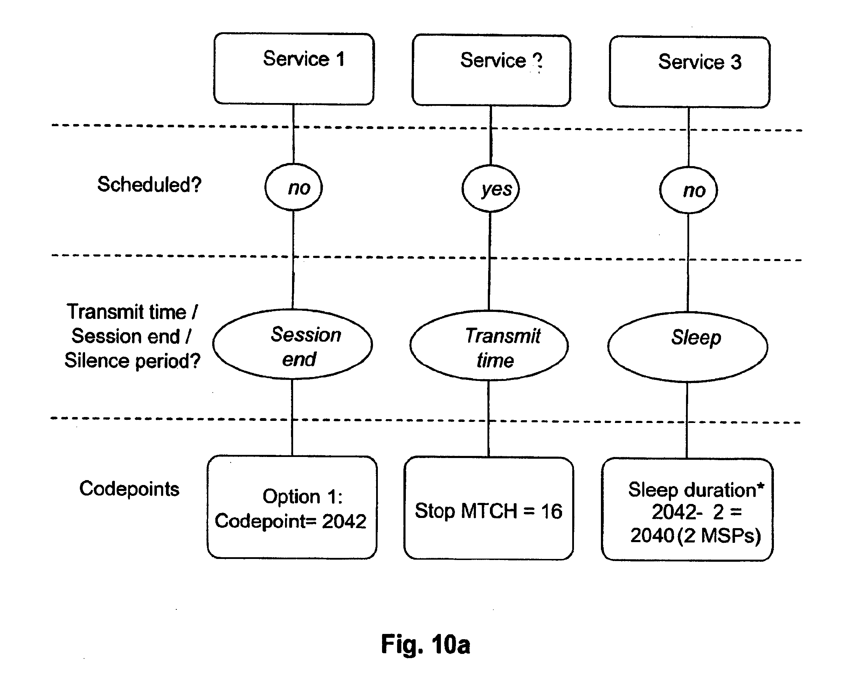

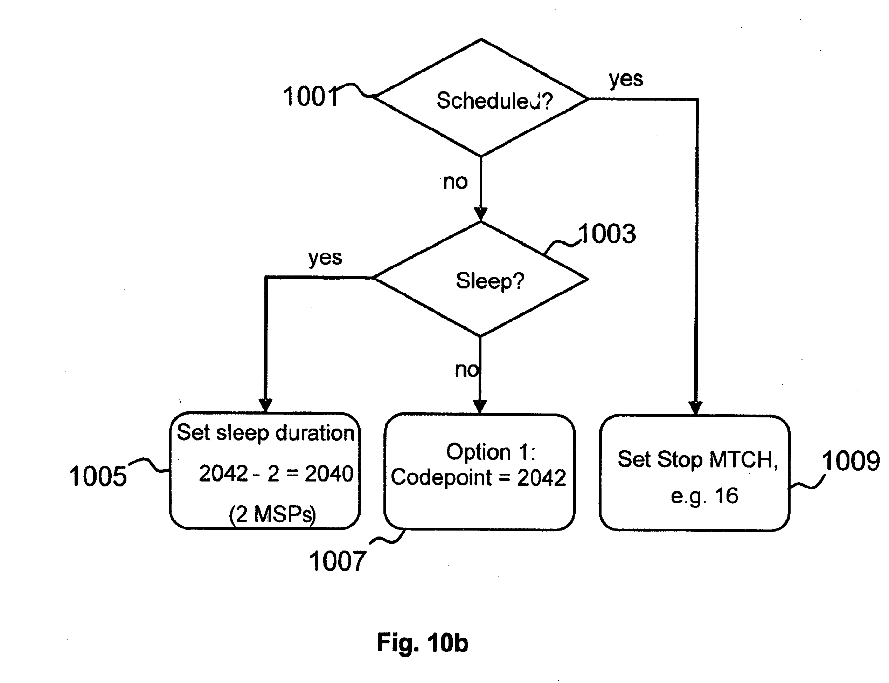

Turning now to figures 9 and 10, further embodiments will be discussed in some detail. Figure 9a illustrates an embodiment with an example using a hierarchical bitmap to indicate session end in MSI and further information, if necessary. Figure 9b is a flow chart corresponding to the illustration in figure 9a. Figure 10a illustrates an embodiment with an indication using codepoints with some mapping to transmit time indication (MTCH stop), sleep duration or session end indication in MSI. Figure 10b is a flow chart corresponding to the illustration in figure 10a.

The MSI is extended to comprise further information about unscheduled services to provide information beyond the current scheduling period. Session ends may not only be indicated on MCCH, but already in advance in the MSI. A second bitmap in addition to the first bitmap which provides whether the services are scheduled or not, may be used to indicate that the session has already ended, in order to preserve an UE to wake up at the next scheduling periods until it reads session end information on MCCH. Alternatively, another specific codepoint may be used for that purpose. In general, the MSI uses several bits data field of each service to provide information about the transmit times of the service within the scheduling period. Since such information only requires a subset of the available value range of the data field, the free values may be used as codepoints.

Furthermore, the second bitmap may be used to distinguish between a session end and a session silence period as illustrated in figure 9a. If the bitmap signals a session silence period for a service, the data field of a service may be used to indicate the duration of the sleep period or the next wake-up occasion to read the MSI.

In other words, as illustrated in figure 9b, a check is made in a checking step 901 if a service is scheduled. If it is found in the checking step 901 that the service is scheduled, then, the scheduled bit, bit 1, for the said service is set to the value 1 in step 903. In step 905 bit 2 has no specific meaning and could be set to any arbitrary value and will be ignored by the UE. Since the service is scheduled, the transmit duration of the service is determined in step 907 and in the data field the Stop MTCH for said service is set accordingly to an appropriate value to implicitly indicate the duration of service reception to the UE.

If it is found in the checking step 901 that the service is not scheduled, then the scheduled bit, bit 1, for the service is set to the value 0 in step 909. Afterwards, a check is made in a checking step 911 if the UE is supposed to sleep or if it may completely stop the reception due to a session end. If it is found in the checking step 911 that the UE is only supposed to enter a sleep mode, the sleep bit, bit 2, is set to value 1 in step 913. Then the network node checks in step 915 the silence duration for the service and sets the sleep duration in the data field accordingly.

If it is found in checking step 911 that the session of the service has ended, the sleep bit, bit 2, will be set to the value 0 in step 917 to indicate to the UE that it does not need to sleep for a restricted time, but that it may stop the reception of the service completely. The data field may be set to any arbitrary value, e.g. 0, because it will not be interpreted by the UE, as illustrated by setting a dummy value in step 919. The data field is also transmitted to the UE to keep a constant size of 2 bytes per service and byte alignment.

If the bitmap approach is not used at all, codepoints in the data fields may not only be used to indicate session ends, but also to indicate a sleep period longer than the scheduling period. Different schemes may be used to allocate the free values as codepoints to indicate the minimum or actual duration of the silence or sleep period or the next wake-up occasion. For example, with MSP=320ms and with 11 bits available for transmit time indication which only requires a range between 0 and 192, 32 radio frames * 6 MBSFN subframes on a mixed carrier, the values between 193 and 2042 may be used as codepoints, the values 2043-2046 are reserved values and could in principle be used as well. Figure 10a illustrates an example of a mapping that may be used for the implementation. The value 2047 is specified to indicate services that are unscheduled in the *current* scheduling period, it may also have been the next available value 193 or any other arbitrary value, but the drawback of the latter approach is that the codepoint for unscheduled services may change depending on the MCH scheduling period, MSP, and the remaining values may be used to indicate the sleep duration / next wake-up occasion for the UE regarding that service.

In order to calculate the codepoint corresponding to the actual silence/sleep duration, different methods may be applied. One possible and simple way is to use the last free value as a reference value; in this example, option 1, this would be 2042. Then, the codepoint may be calculated by using the actual sleep duration or next wake-up occasion as the minuend and the reference value as the subtrahend or the other way round, respectively. To indicate, e.g., a sleep duration of 2 scheduling periods, a codepoint set to 2040 may be used: Minuend = reference value is the maximum free value; and subtrahend = sleep duration, e.g. 2042 - 2 = 2040. It is to be noted that a sleep duration of 0 scheduling periods, i.e. the service is unscheduled only in the current scheduling period, is already reflected by the special codepoint 2047, such that 2042 would be unused. In order to indicate a session end, it is possible to set the codepoint to the next reserved value, i.e. 2046, or to the largest free value, i.e. 2042 which is not used anyway in this example. If in option 2 the next reserved value, i.e. 2046, is used, the reference value may also be increased by 1 to avoid the value 2042 to be unused, e.g. 2042+1 - 2 = 2041.

This requires that the UE knows the used reference value. This may be implicitly calculated by using the maximum number of MBSFN subframes that may be used for MBMS transmission within a radio frame and the scheduling period or by explicitly transmitting the range that is used to indicate the transmit time and/or sleep duration of the listed services on MCCH.

In other words, as illustrated in figure 10b, a check is made in a checking step 1001 if a service is scheduled. If it is found in the checking step 1001 that the service is scheduled, then, the transmit duration of the service is determined in step 1009, and in the data field the Stop MTCH for the service is set accordingly to an appropriate value to implicitly indicate the duration of service reception to the UE.

If it is found in the checking step 1001 that the service is not scheduled, another check is made in step 1003 to check whether the UE may sleep due to a silence period or whether it may entirely cease service reception due to session end. If it is found in step 1003 that the UE is only supposed to enter a sleep mode, the sleep duration is determined in step 1005, and in the data field the codepoint is set to an appropriate value to indicate the sleep duration, in this example the backwards counting approach from the largest free value within the value range used as reference value (2042) is applied. The special codepoint with value 2047 is used to indicate a sleep duration of 0 scheduling periods according to the current 3GPP Rel-9 specification, i.e. the value 2047 indicates that the service is unscheduled only in the current scheduling period and that the UE is supposed to wake up at the next MSP of the corresponding MCH to read the MSI.

If it is found in a checking step 1003 that the UE is not supposed to sleep for a restricted number of scheduling periods, but entirely cease service reception due to a session end, the codepoint is set to a special codepoint, 2042 as the largest free value (only depicted for option 1).

According to yet another embodiment it is also possible to use the first bitmap to indicate if a service is scheduled or not and a codepoint approach to provide further information instead of using the second bitmap. In this case, if the service is unscheduled then the codepoint in the data field indicates either a session end or a particular sleep duration and if the service is scheduled then the value of the data fields indicates the transmit time.

Embodiments include those that involve short service sessions. Short sessions are transmitted in a significantly shorter period than the MCCH modification period. One example for services with very short sessions is a service mode, e.g., for download of small files, such as MMS or audio files. This takes a few seconds. Depending on the size of the file, some sessions may even require only a fraction of a second. This would be true for a small MMS file.

### Impact of short sessions on UE energy consumption:

Service information such as session start and session end is transmitted on MCCH. So, the session end may only be announced after the modification period. After having received all data of the short session, the UE may know on application layer that, e.g., the download is complete. However, the application would need to be able to signal to lower layers that it does not have to monitor the MSI any more. However, this is up to UE implementation.

When the session has ended already, UE will in general wake up at every scheduling period until it finds session end indication on MCCH. The larger the modification period, the larger unnecessary UE energy consumption will be. Since MCCH information is transmitted in RRC messages, there will be some further decoding delay until the UE notices that the session has ended.

### Session end in MSI to save battery:

### Parameter assumptions:

| **Parameter** | **Value** |
|---|---|
| MCCH modification period | 10.24 s |
| Scheduling interval | 320 ms |
| Download duration | 1 s |

Under the assumptions listed in the table above, the UE would need 4 scheduling intervals to download the complete file. In the remaining 28 scheduling intervals, the UE has to wake up to find out that the service is not scheduled. If the session end is indicated in the MSI already, the UE could sleep almost 90 % of the time during which MSI is transmitted.

Since the sessions are very short, it is quite probable that it only requires very few scheduling intervals to be completely transmitted. As soon as session start has been announced on MCCH, it is most efficient to distribute the service data in the first scheduling intervals. Otherwise, if the service is not scheduled e.g. in the first 30 scheduling intervals, the UE would have to read unnecessary scheduling information at the beginning of the MCCH modification period before it may actually receive the MBMS data. Thus, it may maximize its sleep duration.

Hence, it is possible to indicate in MSI that a service has already ended as described above in connection with figures 9 and 10.

Embodiments include those that involve intermittent services/sessions. Sessions of intermittent services may remain ongoing but not scheduled for some time. Services are updated very frequently and consequently scheduled very frequently as well. Information updates within the service may be in the order of a few seconds or larger, but not significantly larger than multiple MCCH modification periods. In such a case, the update intervals would be too small that a session start / session end procedure would pay off.

The stock ticker service is one example of intermittent services which may have updates every few seconds. It is assumed that consumers may want to receive brand new information with very low latencies, which requires avoiding MBMS session starts and session stops.

### Impact on UE energy consumption:

The UE has to wake up at every scheduling period, although the service is only scheduled in a small fraction of all scheduling periods.

### Sleep information in MSI:

Extend bitmap / additional codepoint: The application layer often knows when new information will be fetched and updated. Both schemes may contain an information on the (minimum) number of scheduling periods to sleep. The eNB must know at least the earliest time at which new data for these services will be transmitted or even the periodicity of service transmission. This requires from BM-SC that it indicates some kind of update periodicity, e.g. service-specific update intervals.

It may be difficult to convey per packet when the next packet transmission from the BM-SC will take place, so that dynamic sleep information may be difficult to realize. It appears more realistic to configure a periodic sleep pattern already when the session is established. A sleep pattern may be defined by the number of consecutive scheduling intervals where the service is/is not scheduled.

Hence, it is possible to indicate the sleep duration for MBMS UE in MSI, e.g. in terms of multiple of MSI periods.

The signalling of sleep periods may be realized as an extension to the session end signalling. The second bitmap may be used to distinguish between a session end and a session silence period as illustrated in figure 9. Similarly to the transmission time indication for scheduled services, additional information may be used to indicate the duration of the sleep period or the next wake-up occasion to read the MSI.

If no bitmap is used at all, another codepoint may indicate a sleep period longer than the scheduling period, as described above in connection with figure 10.

Embodiments include those that involve short carrousel services. Short carrousel services are characterized by repetitions between actual information updates to allow any new-coming user to receive the latest information as soon as possible, service mode 3. If the repetitions are smaller or in the order of few modification periods it does not make any sense to have short session durations with frequent session starts and stops as described above. Note that the options described below assume that the minimum duration between service updates is known, e.g. configured in the service layer. Furthermore, it is assumed that the UE does not want to receive any repetitions.

One option is then that the MCCH provides information about the service repetition period and number of repetitions.

A second option is then to add information in MSI to indicate if it has scheduled a new or a repeated transmission, maybe use new data indicator. This requires the extension of the bitmap or the addition of a codepoint, respectively.

If the UE receives new and not repeated data, it knows the minimum time to sleep until it has to wake up to read the MSI. This is sub-optimal if the UE does not receive the new data. Then it would also have to wake up at the next service repetition periods.

Another option is to indicate the sleep duration until the service is updated.

Alternatively, the MSI could directly indicate the minimum sleep duration until the service is updated. After each repetition, the value would be reduced accordingly. The advantage of this scheme is that it may be used for both intermittent as well as short carrousel services.

Hence, it is possible to indicate the sleep duration until the service is updated. Thus, no extra information is needed on MCCH. An example for such a service is traffic information with different kinds of messages, such as e.g. traffic jam.

To conclude, in order to improve the UE power saving for short, intermittent and carrousel services, the following examples are useful regarding signalling in the MSI: indicate session end in MSI, consider introducing sleep duration for MBMS UE in case of intermittent services, add information in MSI to indicate if it has scheduled a new or a repeated transmission, may be use new data indicator, in case of carrousel services, while no extra information shall be transmitted on MCCH.

## Claims

1. A method in a network node (206) for providing Multimedia Broadcast/Multicast Service, MBMS, from the network node (206) to a user equipment, UE, (306) in a mobile communication system, the method comprising:
- determining (401) a scheduling information for at least one MBMS service such that the scheduling information comprises information about transmission of data of the at least one MBMS service for a scheduling period that is later than a current scheduling period and wherein the information indicates an end of session for the MBMS service; and
- transmitting (403) data of the at least one MBMS service and the scheduling information for said at least one MBMS service, the transmission taking place in the current scheduling period and in a plurality of consecutive scheduling periods following the current scheduling period.

2. The method of claim 1, wherein the determination of the scheduling information comprises:
- determining information that indicates a number of scheduling periods in which the MBMS service will not be scheduled.

3. The method of claim 2, wherein the determination of information that indicates a number of scheduling periods in which the MBMS service will not be scheduled comprises:
- determining a minimum number of scheduling periods.

4. The method of any of claims 1 to 3, wherein the determination of the scheduling information comprises:
- determining information about the next scheduling period in which the UE (306) shall receive scheduling information about the MBMS service.

5. The method of claim 4, wherein the determination of information about the scheduling period in which the UE (306) shall receive scheduling information about the MBMS service comprises:
- determining a bitmap, which indicates whether or not the MBMS service will not be scheduled at least for the current scheduling period.

6. The method of claim 5, wherein the bitmap indicates whether or not the MBMS service will not be scheduled at least for the next scheduling period.

7. The method of any of claim 4 to 6, wherein the determination of information about the scheduling period in which the UE (306) shall receive scheduling information about the MBMS service comprises:
- determining a bitmap, which indicates whether or not the MBMS service has ended.

8. The method of claim 4, wherein the determination of information about the scheduling period in which the UE (306) shall receive scheduling information about the MBMS service comprises:
- determining a codepoint, which indicates whether or not the MBMS service will not be scheduled at least for the current scheduling period.

9. The method of claim 8, wherein the codepoint indicates whether or not the MBMS service will not be scheduled at least for the next scheduling period.

10. The method of claim 4 or 8, wherein the determination of information about the scheduling period in which the UE (306) shall receive scheduling information about the MBMS service comprises:
- determining a codepoint, which indicates whether or not the MBMS service has ended.

11. The method of any of claims 8 to 10, wherein the determination of the codepoint comprises:
- determining a value representing any of sleep duration and wake-up time point for the UE (306).

12. The method of any of claims 8 to 11, comprising:
- transmission of information that indicates a valid value range for the codepoint which shall indicate any of the sleep duration and transmit time.

13. A method in a user equipment, UE, (306) for receiving Multimedia Broadcast/Multicast Service, MBMS, from a network node (206) in a mobile communication system, the method comprising:
- receiving (402) data of at least one MBMS service and scheduling information for said at least one MBMS service, the reception taking place in a current scheduling period;
- determining (404), if a service is unscheduled, whether the received scheduling information comprises information about the reception of data of the at least one MBMS service for a scheduling period that is later than the current scheduling period and wherein the information indicates an end of session for the MBMS service;
- interpreting (406) the received scheduling information and, as a consequence of the interpretation for unscheduled services, entering a sleep mode for a duration of at least one scheduling period.

14. A network node (206) for providing Multimedia Broadcast/Multicast Service, MBMS, from the network node (206) to a user equipment, UE, (306) in a mobile communication system, the network node (206) comprising control and communication circuitry (250), comprising:
- transmission circuitry (232) configured to transmit data of at least one MBMS service and scheduling information for said at least one MBMS service, the transmission taking place in a current scheduling period and in a plurality of consecutive scheduling periods following the current scheduling period;
- determination circuitry (210, 211) configured to determine the scheduling information such that the scheduling information comprises information about transmission of data of the at least one MBMS service for a scheduling period that is later than the current scheduling period and wherein the information indicates an end of session for the MBMS service.

15. A user equipment, UE, (306) for receiving Multimedia Broadcast/Multicast Service, MBMS, from a network node (206) in a mobile communication system, the UE (306) comprising control and communication circuitry (350), comprising:
- reception circuitry (312) configured to receive data of at least one MBMS service and scheduling information for said at least one MBMS service, the reception taking place in a current scheduling period;
- determination circuitry (310, 311) configured to determine, if a service is unscheduled, whether the received scheduling information comprises information about the reception of data of the at least one MBMS service for a scheduling period that is later than the current scheduling period and wherein the information indicates an end of session for the MBMS service;
- interpretation and control circuitry (310, 311) configured to interpret the received scheduling information and, as a consequence of the interpretation for unscheduled services, control the UE (306) to enter a sleep mode for a duration of at least one scheduling period.

## Patentansprüche

1. Verfahren in einem Netzknoten (206) zum Bereitstellen von Multimedia Broadcast/Multicast Service, MBMS, vom Netzknoten (206) zu einer Benutzereinrichtung, User Equipment, UE, (306) in einem Mobilkommunikationssystem, wobei das Verfahren Folgendes umfasst:
- Ermitteln (401) einer Planinformation für mindestens einen MBMS-Dienst derart, dass die Planinformation Informationen über Übertragung von Daten des mindestens einen MBMS-Dienstes für einen Planzeitraum umfasst, der später als ein aktueller Planzeitraum ist, und wobei die Informationen ein Sitzungsende für den MBMS-Dienst anzeigen; und
- Übertragen (403) von Daten des mindestens einen MBMS-Dienstes und der Planinformation für den mindestens einen MBMS-Dienst, wobei die Übertragung im aktuellen Planzeitraum und in mehreren aufeinanderfolgenden Planzeiträumen stattfindet, die auf den aktuellen Planzeitraum folgen.

2. Verfahren nach Anspruch 1, wobei die Ermittlung der Planinformation Folgendes umfasst:
- Ermitteln von Informationen, die eine Anzahl von Planzeiträumen anzeigen, in denen der MBMS-Dienst nicht geplant werden wird.

3. Verfahren nach Anspruch 2, wobei die Ermittlung von Informationen, die eine Anzahl von Planzeiträumen anzeigen, in denen der MBMS-Dienst nicht geplant werden wird, Folgendes umfasst:
- Ermitteln einer Mindestanzahl von Planzeiträumen.

4. Verfahren nach einem der Ansprüche 1 bis 3, wobei die Ermittlung der Planinformation Folgendes umfasst:
- Ermitteln von Informationen über den nächsten Planzeitraum, in dem die UE (306) Planinformationen über den MBMS-Dienst empfangen soll.

5. Verfahren nach Anspruch 4, wobei die Ermittlung von Informationen über den Planzeitraum, in dem die UE (306) Planinformationen über den MBMS-Dienst empfangen soll, Folgendes umfasst:
- Ermitteln einer Bitmap, die anzeigt, ob der MBMS-Dienst nicht mindestens für den aktuellen Planzeitraum geplant werden wird oder nicht.

6. Verfahren nach Anspruch 5, wobei die Bitmap anzeigt, ob der MBMS-Dienst nicht mindestens für den nächsten Planzeitraum geplant werden wird oder nicht.

7. Verfahren nach einem der Ansprüche 4 bis 6, wobei die Ermittlung von Informationen über den Planzeitraum, in dem die UE (306) Planinformationen über den MBMS-Dienst empfangen soll, Folgendes umfasst:
- Ermitteln einer Bitmap, die anzeigt, ob der MBMS-Dienst geendet hat oder nicht.

8. Verfahren nach Anspruch 4, wobei die Ermittlung von Informationen über den Planzeitraum, in dem die UE (306) Planinformationen über den MBMS-Dienst empfangen soll, Folgendes umfasst:
- Ermitteln eines Codepoints, der anzeigt, ob der MBMS-Dienst nicht mindestens für den aktuellen Planzeitraum geplant werden wird oder nicht.

9. Verfahren nach Anspruch 8, wobei der Codepoint anzeigt, ob der MBMS-Dienst nicht mindestens für den nächsten Planzeitraum geplant werden wird oder nicht.

10. Verfahren nach Anspruch 4 oder 8, wobei die Ermittlung von Informationen über den Planzeitraum, in dem die UE (306) Planinformationen über den MBMS-Dienst empfangen soll, Folgendes umfasst:
- Ermitteln eines Codepoints, der anzeigt, ob der MBMS-Dienst geendet hat oder nicht.

11. Verfahren nach einem der Ansprüche 8 bis 10, wobei die Ermittlung des Codepoints Folgendes umfasst:
- Ermitteln eines Wertes, der irgendetwas von einer Ruhedauer und einem Aufwachzeitpunkt für die UE (306) repräsentiert.

12. Verfahren nach einem der Ansprüche 8 bis 11, das Folgendes umfasst:
- Übertragung von Informationen, die einen gültigen Wertebereich für den Codepoint anzeigen, der irgendetwas von der Ruhedauer und der Übertragungszeit anzeigen soll.

13. Verfahren in einer Benutzereinrichtung, User Equipment, UE, (306) zum Empfangen von Multimedia Broadcast/Multicast Service, MBMS, von einem Netzknoten (206) in einem Mobilkommunikationssystem, wobei das Verfahren Folgendes umfasst:
- Empfangen (402) von Daten mindestens eines MBMS-Dienstes und von Planinformation für den mindestens einen MBMS-Dienst, wobei der Empfang in einem aktuellen Planzeitraum stattfindet;
- Ermitteln (404), wenn ein Dienst ungeplant ist, ob die empfangene Planinformation Informationen über den Empfang von Daten des mindestens einen MBMS-Dienstes für einen Planzeitraum umfasst, der später als der aktuelle Planzeitraum ist, und wobei die Informationen ein Sitzungsende für den MBMS-Dienst anzeigen;
- Interpretieren (406) der empfangenen Planinformation und, als Folge der Interpretation für ungeplante Dienste, Übergehen in einen Ruhemodus für eine Dauer mindestens eines Planzeitraumes.

14. Netzknoten (206) zum Bereitstellen von Multimedia Broadcast/Multicast Service, MBMS, vom Netzknoten (206) zu einer Benutzereinrichtung, User Equipment, UE, (306) in einem Mobilkommunikationssystem, wobei der Netzknoten (206) Steuer- und Kommunikationsschaltung (250) umfasst, die Folgendes umfasst:
- Übertragungsschaltung (232), die konfiguriert ist, Daten mindestens eines MBMS-Dienstes und Planinformation für den mindestens einen MBMS-Dienst zu übertragen, wobei die Übertragung in einem aktuellen Planzeitraum und in mehreren aufeinanderfolgenden Planzeiträumen stattfindet, die auf den aktuellen Planzeitraum folgen;
- Ermittlungsschaltung (210, 211), die konfiguriert ist, die Planinformation derart zu ermitteln, dass die Planinformation Informationen über Übertragung von Daten des mindestens einen MBMS-Dienstes für einen Planzeitraum umfasst, der später als der aktuelle Planzeitraum ist, und wobei die Informationen ein Sitzungsende für den MBMS-Dienst anzeigen.

15. Benutzereinrichtung, User Equipment, UE, (306) zum Empfangen von Multimedia Broadcast/Multicast Service, MBMS, von einem Netzknoten (206) in einem Mobilkommunikationssystem, wobei die UE (306) Steuer- und Kommunikationsschaltung (350) umfasst, die Folgendes umfasst:
- Empfangsschaltung (312), die konfiguriert ist, Daten mindestens eines MBMS-Dienstes und Planinformation für den mindestens einen MBMS-Dienst zu empfangen, wobei der Empfang in einem aktuellen Planzeitraum stattfindet;
- Ermittlungsschaltung (310, 311), die konfiguriert ist, um zu ermitteln, wenn ein Dienst ungeplant ist, ob die empfangene Planinformation Informationen über den Empfang von Daten des mindestens einen MBMS-Dienstes für einen Planzeitraum umfasst, der später als der aktuelle Planzeitraum ist, und wobei die Informationen ein Sitzungsende für den MBMS-Dienst anzeigen;
- Interpretations- und Steuerschaltung (310, 311), die konfiguriert ist, um die empfangene Planinformation zu interpretieren und, als Folge der Interpretation für ungeplante Dienste, die UE (306) derart zu steuern, dass sie in einen Ruhemodus für eine Dauer mindestens eines Planzeitraumes übergeht.

## Revendications

1. Procédé dans un noeud de réseau (206) pour fournir un service de diffusion/multidiffusion multimédia, MBMS, du noeud de réseau (206) à un équipement d'utilisateur, UE, (306) dans un système de communication mobile, le procédé comprenant :
- la détermination (401) d'informations d'ordonnancement pour au moins un service MBMS de sorte que les informations d'ordonnancement comprennent des informations concernant la transmission de données du au moins un service MBMS pour une période d'ordonnancement qui est postérieure à une période d'ordonnancement actuelle et où les informations indiquent une fin de session pour le service MBMS ; et
- la transmission (403) de données du au moins un service MBMS et des informations d'ordonnancement pour ledit au moins un service MBMS, la transmission ayant lieu dans la période d'ordonnancement actuelle et dans une pluralité de périodes d'ordonnancement consécutives suivant la période d'ordonnancement actuelle.

2. Procédé selon la revendication 1, dans lequel la détermination des informations d'ordonnancement comprend :
- la détermination d'informations qui indiquent un nombre de périodes d'ordonnancement dans lesquelles le service MBMS ne sera pas ordonnancé.

3. Procédé selon la revendication 2, dans lequel la détermination d'informations qui indiquent un nombre de périodes d'ordonnancement dans lesquelles le service MBMS ne sera pas ordonnancé comprend :
- la détermination d'un nombre minimum de périodes d'ordonnancement.

4. Procédé selon l'une quelconque des revendications 1 à 3, dans lequel la détermination des informations d'ordonnancement comprend :
- la détermination d'informations concernant la prochaine période d'ordonnancement dans laquelle l'UE (306) doit recevoir des informations d'ordonnancement concernant le service MBMS.

5. Procédé selon la revendication 4, dans lequel la détermination d'informations concernant la période d'ordonnancement dans laquelle l'UE (306) doit recevoir des informations d'ordonnancement concernant le service MBMS comprend :
- la détermination d'une table de bits, qui indique si oui ou non le service MBMS ne sera pas ordonnancé au moins pour la période d'ordonnancement actuelle.

6. Procédé selon la revendication 5, dans lequel la table de bits indique si oui ou non le service MBMS ne sera pas ordonnancé au moins pour la prochaine période d'ordonnancement.

7. Procédé selon l'une quelconque des revendications 4 à 6, dans lequel la détermination d'informations concernant la période d'ordonnancement dans laquelle l'UE (306) doit recevoir des informations d'ordonnancement concernant le service MBMS comprend :
- la détermination d'une table de bits, qui indique si oui ou non le service MBMS est terminé.

8. Procédé selon la revendication 4, dans lequel la détermination d'informations concernant la période d'ordonnancement dans laquelle l'UE (306) doit recevoir des informations d'ordonnancement concernant le service MBMS comprend :
- la détermination d'un point de code, qui indique si oui ou non le service MBMS ne sera pas ordonnancé au moins pour la période d'ordonnancement actuelle.

9. Procédé selon la revendication 8, dans lequel le point de code indique si oui ou non le service MBMS ne sera pas ordonnancé au moins pour la prochaine période d'ordonnancement.

10. Procédé selon la revendication 4 ou 8, dans lequel la détermination d'informations concernant la période d'ordonnancement dans laquelle l'UE (306) doit recevoir des informations d'ordonnancement concernant le service MBMS comprend :
- la détermination d'un point de code, qui indique si oui ou non le service MBMS est terminé.

11. Procédé selon l'une quelconque des revendications 8 à 10, dans lequel la détermination du point de code comprend :
- la détermination d'une valeur représentant l'un quelconque d'une durée de sommeil et d'un point temporel de réveil pour l'UE (306).

12. Procédé selon l'une quelconque des revendications 8 à 11, comprenant :
- la transmission d'informations qui indiquent une plage de valeurs valides pour le point de code qui doit indiquer l'un quelconque de la durée de sommeil et du temps de transmission.

13. Procédé dans un équipement d'utilisateur, UE, (306) pour recevoir un service de diffusion/multidiffusion multimédia, MBMS, en provenance d'un noeud de réseau (206) dans un système de communication mobile, le procédé comprenant :
- la réception (402) de données d'au moins un service MBMS et d'informations d'ordonnancement pour ledit au moins un service MBMS, la réception ayant lieu dans une période d'ordonnancement actuelle ;
- la détermination (404), si un service est non ordonnancé, de si les informations d'ordonnancement reçues comprennent des informations concernant la réception de données du au moins un service MBMS pour une période d'ordonnancement qui est postérieure à la période d'ordonnancement actuelle et où les informations indiquent une fin de session pour le service MBMS ;
- l'interprétation (406) des informations d'ordonnancement reçues et, en conséquence de l'interprétation pour des services non ordonnancés, l'entrée dans un mode de sommeil pour une durée d'au moins une période d'ordonnancement.

14. Noeud de réseau (206) pour fournir un service de diffusion/multidiffusion multimédia, MBMS, du noeud de réseau (206) à un équipement d'utilisateur, UE, (306) dans un système de communication mobile, le noeud de réseau (206) comprenant un ensemble de circuits de commande et de communication (250), comprenant :
- un ensemble de circuits de transmission (232) configuré pour transmettre des données d'au moins un service MBMS et des informations d'ordonnancement pour ledit au moins un service MBMS, la transmission ayant lieu dans une période d'ordonnancement actuelle et dans une pluralité de périodes d'ordonnancement consécutives suivant la période d'ordonnancement actuelle ;
- un ensemble de circuits de détermination (210, 211) configuré pour déterminer les informations d'ordonnancement de sorte que les informations d'ordonnancement comprennent des informations concernant la transmission de données du au moins un service MBMS pour une période d'ordonnancement qui est postérieure à la période d'ordonnancement actuelle et où les informations indiquent une fin de session pour le service MBMS.

15. Equipement d'utilisateur, UE, (306) pour recevoir un service de diffusion/multidiffusion multimédia, MBMS, en provenance d'un noeud de réseau (206) dans un système de communication mobile, l'UE (306) comprenant un ensemble de circuits de commande et de communication (350), comprenant :
- un ensemble de circuits de réception (312) configuré pour recevoir des données d'au moins un service MBMS et des informations d'ordonnancement pour ledit au moins un service MBMS, la réception ayant lieu dans une période d'ordonnancement actuelle ;
- un ensemble de circuits de détermination (310, 311) configuré pour déterminer, si un service est non ordonnancé, si les informations d'ordonnancement reçues comprennent des informations concernant la réception de données du au moins un service MBMS pour une période d'ordonnancement qui est postérieure à la période d'ordonnancement actuelle et où les informations indiquent une fin de session pour le service MBMS ;
- un ensemble de circuits d'interprétation et de commande (310, 311) configuré pour interpréter les informations d'ordonnancement reçues et, en conséquence de l'interprétation pour des services non ordonnancés, commander l'UE (306) pour entrer dans un mode de sommeil pour une durée d'au moins une période d'ordonnancement.
